(19) Europäisches Patentamt / European Patent Office / Office européen des brevets

(11) **EP 2 910 758 A1**

(12) **DEMANDE DE BREVET EUROPEEN**

(43) Date de publication:
26.08.2015 Bulletin 2015/35

(51) Int Cl.:
*F02D 41/14* (2006.01)        *F02D 41/24* (2006.01)
*F01N 3/20* (2006.01)

(21) Numéro de dépôt: **15151434.6**

(22) Date de dépôt: **16.01.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.01.2014 FR 1450742**

(71) Demandeur: **PEUGEOT CITROËN AUTOMOBILES SA**
**78140 Vélizy-Villacoublay (FR)**

(72) Inventeur: **Suy, Dara**
**95360 Montmagny (FR)**

(54) **PROCEDE DE CORRECTION D'UN MODELE D'ESTIMATION D'UNE QUANTITE D'OXYDES D'AZOTES EN AMONT D'UN SYSTEME DE REDUCTION CATALYTIQUE SELECTIVE**

(57)  L'invention porte sur un procédé de correction d'un modèle (M) d'estimation d'une quantité de NOx en amont d'un système de réduction catalytique (51) pour moteur thermique (2) adapté à injecter un réducteur des NOx, caractérisé en ce qu'il comporte les étapes suivantes:
- appliquer une première stratégie (Strat_corr_1) de correction en appliquant un premier coefficient de correction à la quantité de réducteur à injecter,
- détecter une surestimation ou une sous-estimation jugées non acceptables de la quantité de NOx par le modèle (M),
- si une telle détection est avérée, appliquer une deuxième stratégie de correction (Strat_corr_2) dans laquelle l'estimation de la quantité de NOx du modèle (M) est corrigée par un second coefficient de correction de quantité de NOx appliqué au modèle (M).

**Fig.1**

**Description**

La présente invention porte sur un procédé de correction d'un modèle d'estimation d'une quantité d'oxydes d'azotes en amont d'un système de réduction catalytique sélective, ainsi que sur le calculateur correspondant.

Dans un contexte de dépollution des gaz d'échappement d'un moteur diesel, les systèmes de réduction catalytique sélective (ou SCR pour "Sélective Catalyst Réduction" en anglais) visent à réduire les oxydes d'azote (NOX) contenus dans les gaz d'échappement. Le fonctionnement du système SCR est basé sur une réaction chimique entre les oxydes d'azote et un réducteur prenant classiquement la forme d'ammoniac. L'injection de l'ammoniac dans la ligne d'échappement est généralement réalisée par l'intermédiaire d'une autre espèce chimique, telle que l'urée qui se décompose en ammoniac et en dioxyde de carbone sous l'effet de la chaleur.

Les réactions d'oxydo-réduction se produisent dans un catalyseur spécifique et sont contrôlées grâce à une sonde, dite sonde NOx, placée en aval de ce catalyseur. En effet, cette sonde NOx permet de corriger les quantités à injecter en cherchant le meilleur compromis entre l'efficacité du système et la désorption d'ammoniac. Ces corrections peuvent toutefois être réalisées uniquement lorsque des conditions particulières de fonctionnement sont réunies, ce qui limite les possibilités d'action de ce procédé de correction faisant intervenir la sonde NOx.

En parallèle, les quantités de réducteur à injecter sont calculées en permanence en fonction de la quantité d'oxydes d'azote déterminée en sortie du moteur, c'est-à-dire en amont du système de réduction catalytique. Pour des raisons de coût, cette quantité d'oxydes d'azote est calculée via un modèle d'émission.

Les quantités ne pouvant pas être corrigées en permanence par la sonde NOx, le modèle d'estimation doit être suffisamment précis pour ne pas faire diverger le système. En effet, dans le cas où la quantité d'oxydes d'azote en sortie moteur est sous-estimée par le modèle, le calculateur commande une sous-injection de réducteur, ce qui entraîne une efficacité insuffisante du système de post-traitement pour respecter les normes de dépollution. Dans le cas où la quantité d'oxydes d'azote en sortie moteur est surestimée par le modèle, le calculateur moteur commande une sur-injection du réducteur, ce qui entraîne un relâchement d'ammoniac en sortie d'échappement (phénomène de désorption).

Les nouvelles normes de dépollution nécessitent d'utiliser le modèle dans des zones dans lesquelles il existe de nombreuses sources d'imprécisions dues aux dispersions du modèle, du moteur thermique, et à l'hygrométrie qui n'est pas mesurée. Ces dispersions sont susceptibles d'être cumulées dans le pire cas, ce qui peut amener à une erreur d'estimation de plus ou moins 70%.

Il a été démontré par simulation qu'au-delà d'une certaine erreur d'estimation de l'ordre de plus ou moins 40%, les corrections se basant sur les mesures de la sonde NOx aval ou sur des algorithmes connus décrits par exemple dans le document FR2931201 ne sont plus capables de rattraper les imprécisions du système pour lui faire retrouver une efficacité suffisante en termes de dépollution et/ou de désorption d'ammoniac.

Le document US2011/0320132 enseigne en outre ne pas injecter de réducteur pendant une durée suffisamment longue afin qu'une comparaison entre le niveau d'oxydes d'azote en amont et en aval du catalyseur SCR soit possible pour permettre une correction adaptée du modèle d'estimation d'oxydes d'azote. Toutefois, cela pose des problèmes d'efficacité du système post-traitement qui ne peut pas respecter les normes de dépollution pendant ces périodes d'inactivité.

L'invention vise à remédier efficacement à ces inconvénients en proposant un procédé de correction d'un modèle d'estimation d'une quantité d'oxydes d'azote en amont d'un système de réduction catalytique pour moteur thermique adapté à injecter un réducteur des d'oxydes d'azote, caractérisé en ce qu'il comporte les étapes suivantes:

- appliquer une première stratégie par défaut de correction du modèle d'estimation de la quantité d'oxydes d'azote, dans laquelle l'estimation de la quantité d'oxydes d'azote du modèle est corrigée en appliquant un coefficient de correction de la quantité de réducteur à injecter,
- détecter une surestimation ou une sous-estimation jugées non acceptables de la quantité d'oxydes d'azote par le modèle,
- si une telle détection est avérée, appliquer une deuxième stratégie de correction du modèle d'estimation de la quantité d'oxydes d'azote dans laquelle l'estimation de la quantité d'oxydes d'azote du modèle est corrigée par un second coefficient de correction de quantité d'oxydes d'azote appliqué au modèle lui-même.

L'invention permet ainsi de réduire les imprécisions extrêmes du modèle d'estimation de la quantité d'oxydes d'azote en sortie du moteur vers une fenêtre suffisante pour que la première stratégie de correction puisse agir et corriger complètement le modèle d'estimation. L'invention permet ainsi un traitement ciblé de l'imprécision extrême du modèle. En outre, le procédé est mis en oeuvre en cours de fonctionnement du catalyseur SCR, ce qui permet d'éviter les périodes inactivité du système post-traitement comme cela peut être le cas avec le procédé décrit dans le document US2011/0320132.

Selon une mise en oeuvre, la détection de la surestimation jugée non acceptable comprend la détection d'une chute de la valeur du coefficient de correction en-dessous d'une première valeur seuil extrême.

Selon une mise en oeuvre, la détection de la sous-estimation jugée non acceptable comprend la détection d'une augmentation de la valeur du coefficient de correction au-delà d'une deuxième valeur seuil extrême.

Selon une mise en oeuvre, la détection de la chute de la valeur du coefficient de correction en dessous de la première valeur seuil extrême est effectuée lorsqu'un déclenchement de différentes actions visant à retrouver une efficacité positive en ramenant un niveau d'oxydes d'azote réel mesuré en aval d'un catalyseur dudit système de réduction catalytique sous un niveau d'oxydes azote amont déterminé par le modèle ne permet pas d'obtenir le résultat recherché.

Selon une mise en oeuvre, le procédé comporte une étape de confirmation temporelle de la chute de la valeur du coefficient de correction de l'injection.

Selon une mise en oeuvre, la détection de surestimation ou de la sous-estimation jugée non acceptable de la quantité d'oxydes d'azote par le modèle est uniquement effectuée par détection du franchissement de la première valeur seuil extrême ou de la deuxième valeur extrême par le coefficient de correction de l'injection de la première stratégie de correction.

Selon une mise en oeuvre, le procédé comprend une analyse de l'évolution du coefficient de correction d'injection de la première stratégie de correction.

Selon une mise en oeuvre, la correction de la deuxième stratégie est appliquée par apprentissage.

Selon une mise en oeuvre, l'apprentissage est effectué par zones de champ moteur et en fonction d'un mode combustion du moteur.

Selon une mise en oeuvre, le procédé comprend une étape de mesure de la quantité d'oxydes d'azote mesurée en aval du système de réduction catalytique et si cette quantité est inférieure à la quantité d'oxydes d'azote estimée en amont du système de réduction catalytique la deuxième stratégie de correction du modèle d'estimation de la quantité d'oxydes d'azote est directement appliquée.

L'invention a également pour objet un calculateur comportant une mémoire stockant des instructions logicielles pour la mise en oeuvre du procédé selon la présente invention.

L'invention a également pour objet un moteur thermique comprenant une ligne d'échappement comportant un système de réduction catalytique sélective, ce moteur comprenant un calculateur de l'invention.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une ligne d'échappement dont le fonctionnement est supervisé par un calculateur selon la présente invention;

La figure 2 est un diagramme des différentes étapes du procédé de correction d'un modèle d'estimation d'une quantité d'oxydes d'azote selon la présente invention;

La figure 3 illustre le cas d'une sous-estimation extrême de la quantité d'oxydes d'azote en amont du catalyseur par le modèle d'estimation.

Les éléments identiques, similaires, ou analogues conservent les mêmes références d'une figure à l'autre.

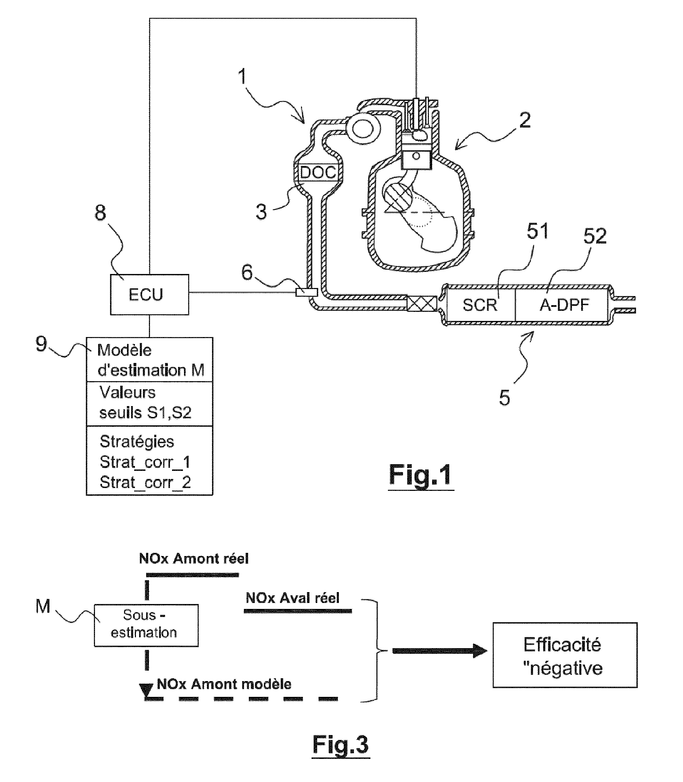

La figure 1 représente une ligne d'échappement 1 d'un moteur thermique 2 sur laquelle sont implantés un catalyseur 3 d'oxydation diesel (DOC) permettant l'oxydation d'hydrocarbure et de monoxyde de carbone en dioxyde de carbone et en eau; ainsi qu'un bloc de dépollution 5 comportant un catalyseur 51 de système SCR et un filtre à particules 52. Un injecteur 6 est positionné entre le catalyseur 3 d'oxydation diesel (DOC) et le bloc de dépollution 5.

Le système SCR est adapté à injecter un réducteur dans la ligne d'échappement 1 afin de transformer les oxydes d'azote (NOx) rejetés par le moteur en azote et en eau. Ce réducteur est acheminé vers l'injecteur 6 via une canalisation au moyen d'un module jauge-pompe (non représenté) situé au niveau du coffre du véhicule.

Un calculateur 8 associé à une mémoire 9 assure notamment la commande du moteur thermique, ainsi qu'une gestion des différents éléments de post-traitement des gaz d'échappement. En particulier, le calculateur 8 gère l'injection de la quantité de réducteur dans la ligne d'échappement 1 en fonction de la quantité d'oxydes d'azote en amont du catalyseur 51 estimée par un modèle M stocké dans la mémoire 9.

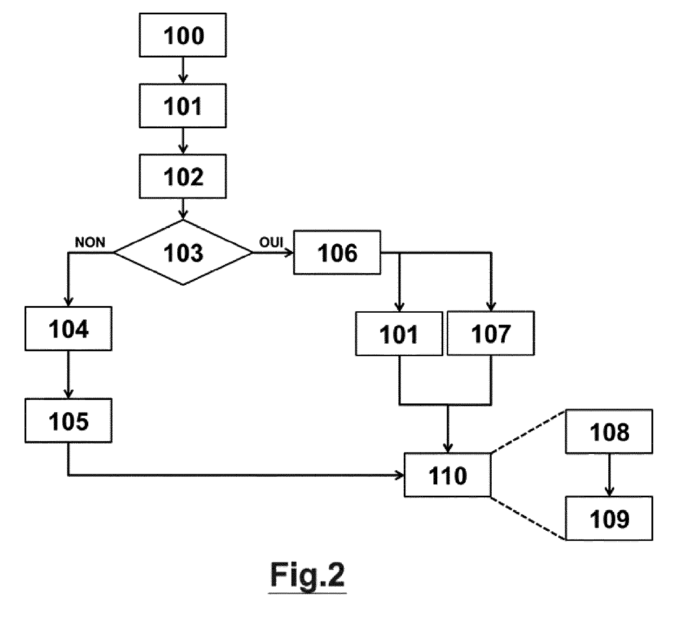

On décrit ci-après en référence avec la figure 2, les différentes étapes du procédé de correction du modèle M selon la présente invention. Dans une première étape 100, le calculateur 8 applique par défaut une première stratégie de correction Strat_corr_1 du modèle M d'estimation de la quantité d'oxydes d'azote dans laquelle l'estimation de la quantité d'oxydes d'azote du modèle M est corrigée en appliquant un coefficient C de correction de la quantité de réducteur à injecter. Cette première stratégie Strat_corr_1, n'affecte pas le modèle M lui-même. Cette première stratégie Strat_corr_1 pourra par exemple être analogue à celle décrite dans le document FR2931201.

Ainsi, en cas de surestimation par le modèle M de la quantité d'oxydes d'azote en amont du catalyseur, cette imprécision va entraîner des désorptions d'ammoniac que la première stratégie de correction Strat_corr_1 va corriger en diminuant les quantités de réducteur à injecter via la modification du coefficient de correction de la stratégie Strat_corr_1. En cas de sous-estimation par le modèle M de la quantité d'oxydes d'azote en amont du catalyseur, cette imprécision va conduire à injecter trop peu et donc l'efficacité de post-traitement sera faible. Dans ce cas, la première stratégie de correction Strat_corr_1 va corriger cette sous-estimation en augmentant les quantités de réducteur à injecter via la modification du coefficient de correction.

Ainsi, dans une étape 101, le calculateur 8 détecte l'occurrence d'une surestimation jugée non acceptable de la quantité d'oxydes d'azote en amont du catalyseur 51 par le modèle M. Cette détection est avérée en cas de chute de la valeur du coefficient de correction C en-dessous d'une première valeur seuil extrême S1, autrement dit par le franchissement à la baisse du coefficient de correction C de l'injection en-dessous de la première valeur seuil extrême S1. Cette première valeur seuil extrême S1 peut être fixée de l'ordre de moins 40% (-40%), relativement à une situation nominale où la quantité d'oxydes d'azote en amont du catalyseur 51 est traitée par la quantité adéquate de réducteur.

La détection de la chute de la valeur du coefficient de correction C en dessous de la valeur seuil extrême S1 est effectuée lorsqu'un déclenchement de différentes actions visant à retrouver une efficacité, $E_{ff}$, positive en ramenant un niveau d'oxydes d'azote réel mesuré en aval du catalyseur 51 sous un niveau d'oxydes azote amont déterminé par ledit modèle d'estimation (étape 102) ne permet pas d'obtenir le résultat recherché. A l'étape 103 on compare le niveau de NOx aval réel à celui de NOx amont estimé par le modèle. Si le niveau de NOx aval réel est inférieur à celui de NOx amont estimé par le modèle (branche OUI), on poursuit le déroulement de Strat_corr_1 (étape 106). Si le niveau de NOx aval réel n'est pas inférieur à celui de NOx amont estimé par le modèle (branche NON) on considère que le seuil extrême S1 a été dépassé, autrement dit que la surestimation n'est pas acceptable (étape 104).

L'efficacité est ici définie par la relation :

$$E_{ff} = \frac{NO_x \, amont \, modèle - NO_x \, aval \, réel}{NO_x \, amont \, modèle}$$

Dans laquelle, $NO_x$ *amont modèle* est la quantité d'oxydes d'azote estimée en amont du système SCR et $NO_x$ *aval réel* est la quantité d'oxydes d'azote mesurée en aval du système SCR.

Comme le montre la figure 3, si $NO_x$*amont modèle* < $NO_x$*aval réel,* on obtient une efficacité dite « négative ».

La chute de la valeur C de correction de l'injection en dessous de la valeur seuil extrême S1 sera avantageusement confirmée temporellement dans une étape 105 de manière à s'assurer qu'il ne s'agit pas d'une simple variation intempestive de l'imprécision du modèle M. Dans le cas contraire, on considèrera que le seuil extrême S1 n'a pas été dépassé, autrement dit que la surestimation est encore acceptable(étape 106).

Dans une étape 107, le calculateur 8 détecte l'occurrence d'une sous-estimation jugée non acceptable de la quantité d'oxydes d'azote en amont du catalyseur par le modèle M. Cette détection est avérée en cas d'augmentation de la valeur de correction C au-delà d'une deuxième valeur seuil S2, autrement dit par le franchissement à la hausse du coefficient C de correction de l'injection au-dessus de la deuxième valeur seuil S2. Cette deuxième valeur seuil extrême S2 peut être fixée de l'ordre de plus 40% (+40%) relativement à une situation nominale où la quantité d'oxydes d'azote en amont du catalyseur 51 est traitée par la quantité adéquate de réducteur.

La détection de la sous-estimation ou de la surestimation non acceptable du modèle M pourra alors être effectuée uniquement par détection de la saturation du coefficient de correction C de l'injection de cette première stratégie de correction Strat_corr_1 (étape 108). Par saturation du coefficient de correction C de l'injection, on entend ici le dépassement d'un des seuils S1 ou S2 tel d'explique aux paragraphes précédents. En effet, il a été démontré par simulation que la correction des autres dispersions cumulées dues à l'injecteur 6, au catalyseur 51, et à la sonde NOx aval ne permettent pas d'atteindre ces seuils et que seule une grande imprécision (par surestimation ou sous-estimation de la quantité d'oxydes d'azote en amont du catalyseur 51) du modèle d'estimation M engendre une telle saturation.

Cette détection de l'imprécision non acceptable du modèle M se faisant dans les deux sens (chute ou augmentation de la valeur de correction C d'injection au-delà des valeurs S1, S2), l'algorithme mis en oeuvre dans cette étape 108 permet de confirmer les détections des cas de sous-estimation importante du modèle NOx amont, en complément des étapes précédentes 102-105. La discrimination entre la chute ou l'augmentation de la valeur de correction C du modèle au-delà d'un des valeurs seuil S1, S2 sera effectuée dans une étape 109 par une analyse d'une évolution du coefficient C de correction de Strat_corr_1.

Suite à la détection d'une surestimation ou d'une sous-estimation jugée inacceptable du modèle M, le calculateur 8 applique, dans une étape 110, une nouvelle stratégie de correction Strat_corr_2 du modèle M d'estimation des oxydes d'azote (différente de la première stratégie Strat_corr_1) adaptée cette fois à la correction du modèle M lui -même , c'est-à-dire dans laquelle l'estimation de la quantité d'oxydes d'azote du modèle M est corrigée par un second coefficient C' de correction de quantité d'oxydes d'azote appliqué au modèle M lui-même.

Dans une variante où, comme on peut le voir à la figure 3, le modèle M sous-estime le niveau de NOx en amont du catalyseur 51 par rapport au niveau de NOx amont réel, en sorte que le calculateur 8 commande une injection insuffisante de réducteur, ce qui engendre une efficacité dite "négative" du système de post-traitement et donc un niveau réel élevé d'oxydes d'azote en aval du catalyseur 51 ne permettant pas de respecter les normes de dépollution, on peut prévoir un passage direct à la deuxième stratégie de correction Strat_corr_2. Dans ce cas le procédé comprend une étape de mesure de la quantité d'oxydes d'azote en aval du système de réduction catalytique, 51 et si cette quantité est inférieure à la quantité d'oxydes d'azote estimée en amont du système de réduction catalytique, 51, par le modèle M, la deuxième stratégie de correction ,Strat_corr_2, du modèle M d'estimation de la quantité d'oxydes d'azote est directement appliquée, sans procéder aux étapes de détection 101, 107.

La correction de la deuxième stratégie de correction Strat_corr_2 est appliquée par apprentissage en appliquant la correction C' sur l'estimation des oxydes d'azote en sortie du moteur permettant de ramener la surestimation ou la sous-estimation des oxydes d'azote par le modèle M dans une fenêtre de valeurs jugées acceptables pouvant de nouveau été traitée par la première stratégie de correction Strat_corr_1 par l'injection. Une telle correction est sauvegardée en mémoire.

L'apprentissage est de préférence effectué par zones de champ moteur définies chacune par une plage de couple et de régime moteur correspondante; et en fonction du mode de combustion du moteur thermique, ce qui permet de couvrir tous les cas de vie du véhicule en fonction desquels l'imprécision du modèle NOx varie.

Les instructions logicielles permettant la mise en oeuvre du procédé selon l'invention décrit ci-dessus sont stockées dans la mémoire 9 du calculateur 8.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Procédé de correction d'un modèle (M) d'estimation d'une quantité d'oxydes d'azote en amont d'un système de réduction catalytique (51) pour moteur thermique (2) adapté à injecter un réducteur des d'oxydes d'azote, **caractérisé en ce qu'**il comporte les étapes suivantes:

   - appliquer une première stratégie (Strat_corr_1) par défaut de correction du modèle (M) d'estimation de la quantité d'oxydes d'azote, dans laquelle l'estimation de la quantité d'oxydes d'azote du modèle (M) est corrigée en appliquant un coefficient (C) de correction de la quantité de réducteur à injecter,
   - détecter une surestimation (101) ou une sous-estimation (107) jugées non acceptables de la quantité d'oxydes d'azote par le modèle (M),
   - si une telle détection est avérée, appliquer une deuxième stratégie de correction (Strat_corr_2) du modèle (M) d'estimation de la quantité d'oxydes d'azote dans laquelle l'estimation de la quantité d'oxydes d'azote du modèle (M) est corrigée par un second coefficient (C') de correction de quantité d'oxydes d'azote appliqué au modèle (M) lui-même.

2. Procédé selon la revendication 1, **caractérisé en ce que** la détection de la surestimation jugée non acceptable comprend la détection d'une chute de la valeur du coefficient de correction (C) en-dessous d'une première valeur seuil extrême (S1).

3. Procédé selon la revendication 1 ou la revendication 2, **caractérisé en ce que** la détection de la sous-estimation jugée non acceptable comprend la détection d'une augmentation de la valeur du coefficient de correction (C) au-delà d'une deuxième valeur seuil extrême (S2).

4. Procédé selon l'une quelconque des revendications 2 ou 3, **caractérisé en ce que** la détection de la chute de la valeur du coefficient de correction (C) en dessous de la première valeur seuil extrême (S1) est effectuée lorsqu'un déclenchement (102) de différentes actions visant à retrouver une efficacité positive en ramenant un niveau d'oxydes d'azote réel mesuré en aval d'un catalyseur dudit système de réduction catalytique sous un niveau d'oxydes azote amont déterminé par le modèle (M) ne permet pas d'obtenir le résultat recherché (103-104).

5. Procédé selon la revendication 4, **caractérisé en ce qu'**il comporte une étape (105) de confirmation temporelle de la chute de la valeur du coefficient de correction (C) de l'injection.

6. Procédé selon l'une quelconque des revendications 3 à 5, caractérisé en ce la détection de surestimation ou de la sous-estimation jugée non acceptable de la quantité d'oxydes d'azote par le modèle (M) est uniquement effectuée par détection du franchissement de la première valeur seuil extrême (S1) ou de la deuxième valeur extrême (S2) par le coefficient de correction (C) de l'injection de la première stratégie de correction (Strat_corr_1).

7. Procédé selon la revendication 6, **caractérisé en ce qu'**il comprend une analyse de l'évolution du coefficient de correction (C) d'injection de la première stratégie de correction (Strat_cor_1).

8. Procédé selon l'une quelconque des revendications 1 à 7, **caractérisé en ce que** la correction de la deuxième stratégie (Strat_corr_2) est appliquée par apprentissage.

9. Procédé selon la revendication 8, **caractérisé en ce que** l'apprentissage est effectué par zones de champ moteur et en fonction d'un mode combustion du moteur.

10. Procédé selon l'une quelconque des revendications précédentes, **caractérisé en ce qu'**il comprend une étape de mesure de la quantité d'oxydes d'azote mesurée en aval du système de réduction catalytique

(51) et si cette quantité est inférieure à la quantité d'oxydes d'azote estimée en amont du système de réduction catalytique (51) la deuxième stratégie de correction (Strat_corr_2) du modèle (M) d'estimation de la quantité d'oxydes d'azote est directement appliquée.

11. Calculateur (8) comportant une mémoire (9) stockant des instructions logicielles pour la mise en oeuvre du procédé selon l'une quelconque des revendications précédentes.

12. Moteur thermique (2) comprenant une ligne (1) d'échappement comportant un système de réduction catalytique sélective, **caractérisé en ce qu'**il comprend un calculateur selon la revendication 11.

**Fig.1**

**Fig.3**

**Fig.2**

Europäisches
Patentamt

European
Patent Office

Office européen
des brevets

**RAPPORT DE RECHERCHE EUROPEENNE**

Numéro de la demande

EP 15 15 1434

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | FR 2 931 201 A1 (PEUGEOT CITROEN AUTOMOBILES SA [FR]) 20 novembre 2009 (2009-11-20) * alinéas [0011], [0012], [0031] - [0055]; figures * | 1-12 | INV. F02D41/14 F02D41/24 F01N3/20 |
| | ----- | | |
| X,D | US 2011/320132 A1 (ZANETTI IGOR [IT] ET AL) 29 décembre 2011 (2011-12-29) * alinéa [0009] - alinéa [0012] * * alinéa [0025] - alinéa [0037] * * figures * | 1-12 | |
| | ----- | | |
| X | EP 1 298 302 A1 (SIEMENS AG [DE]) 2 avril 2003 (2003-04-02) * alinéa [0014] - alinéa [0033] * * alinéa [0042] - alinéa [0056]; figures * | 1-12 | |
| | ----- | | |
| X | EP 2 339 152 A1 (IVECO MOTORENFORSCHUNG AG [CH] FPT MOTORENFORSCHUNG AG [CH]) 29 juin 2011 (2011-06-29) * alinéas [0009] - [0015], [0026] - [0034] * | 1-12 | DOMAINES TECHNIQUES RECHERCHES (IPC) F02D F01N |
| | ----- | | |
| X | WO 2011/082801 A1 (DEUTZ AG [DE]; FRIESEN ANDREAS [DE]) 14 juillet 2011 (2011-07-14) * page 1 - page 4 * | 1-12 | |
| | ----- | | |

Le présent rapport a été établi pour toutes les revendications

| Lieu de la recherche | Date d'achèvement de la recherche | Examinateur |
|---|---|---|
| Munich | 9 juillet 2015 | Aign, Torsten |

EPO FORM 1503 03.82 (P04C02)

**ANNEXE AU RAPPORT DE RECHERCHE EUROPEENNE**
**RELATIF A LA DEMANDE DE BREVET EUROPEEN NO.**                EP 15 15 1434

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-07-2015

| Document brevet cité au rapport de recherche | | Date de publication | Membre(s) de la famille de brevet(s) | | Date de publication |
|---|---|---|---|---|---|
| FR 2931201 | A1 | 20-11-2009 | CN | 102027212 A | 20-04-2011 |
| | | | EP | 2274506 A1 | 19-01-2011 |
| | | | FR | 2931201 A1 | 20-11-2009 |
| | | | US | 2011094209 A1 | 28-04-2011 |
| | | | WO | 2009150336 A1 | 17-12-2009 |
| US 2011320132 | A1 | 29-12-2011 | CN | 102297007 A | 28-12-2011 |
| | | | GB | 2481433 A | 28-12-2011 |
| | | | RU | 2011123956 A | 20-12-2012 |
| | | | US | 2011320132 A1 | 29-12-2011 |
| EP 1298302 | A1 | 02-04-2003 | DE | 10147983 A1 | 24-04-2003 |
| | | | EP | 1298302 A1 | 02-04-2003 |
| EP 2339152 | A1 | 29-06-2011 | AU | 2010334854 A1 | 09-08-2012 |
| | | | CN | 102741530 A | 17-10-2012 |
| | | | EP | 2339152 A1 | 29-06-2011 |
| | | | EP | 2617972 A1 | 24-07-2013 |
| | | | EP | 2617975 A1 | 24-07-2013 |
| | | | ES | 2427763 T3 | 31-10-2013 |
| | | | JP | 2013515896 A | 09-05-2013 |
| | | | RU | 2012131311 A | 27-01-2014 |
| | | | US | 2012285145 A1 | 15-11-2012 |
| | | | WO | 2011076838 A1 | 30-06-2011 |
| WO 2011082801 | A1 | 14-07-2011 | CN | 102597467 A | 18-07-2012 |
| | | | DE | 102009058713 A1 | 22-06-2011 |
| | | | EP | 2513457 A1 | 24-10-2012 |
| | | | JP | 2013514478 A | 25-04-2013 |
| | | | KR | 20120103642 A | 19-09-2012 |
| | | | US | 2012279202 A1 | 08-11-2012 |
| | | | WO | 2011082801 A1 | 14-07-2011 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 2931201
- US 20110320132 A